# EUROPÄISCHE PATENTSCHRIFT

(11) **EP 0 965 619 B1**
(45) Veröffentlichungstag und Bekanntmachung des Hinweises auf die Patenterteilung: **30.07.2003**
(21) Anmeldenummer: 99111264.0
(22) Anmeldetag: 10.06.1999
(51) Int. Cl.: C09D 4/06

(54) **Geruchsvermindertes, kalthärtendes (Meth)acrylat-Reaktionsharz für Bodenbeschichtungen, dieses Reaktionsharz aufweisende Bodenbeschichtungen sowie Verfahren zur Herstellung solcher Bodenbeschichtungen**
Low odor, cold curable, (Meth)acylate reactive resin for floor coating, such réactive resin and the process for producing such floorcoating
Resin réactive (meth)acrylique à odeur réduite et réticulable à froid pour revêtement de sol, telle résin réactive et le procédé de fabrication de tels revêtements de sols

(30) Priorität: 16.06.1998 DE 19826412
(43) Veröffentlichungstag der Anmeldung: 22.12.1999
(73) Patentinhaber: Röhm GmbH & Co. KG, 64293 Darmstadt (DE)
(72) Erfinder: Quis, Peter, Dr., 64298 Darmstadt (DE); Liddiard, Colin, Dr., 64331 Weiterstadt (DE); Braum, Manfred, 55126 Mainz (DE)

(56) Entgegenhaltungen:
- EP-A- 0 693 503
- PATENT ABSTRACTS OF JAPAN vol. 1996, no. 12, 26. Dezember 1996 (1996-12-26) & JP 08 217837 A (AICA KOGYO CO LTD), 27. August 1996 (1996-08-27)

## Beschreibung

Die Erfindung betrifft ein geruchsvermindertes, polymerisierbares, kaithärtendes, reaktives (Meth)acrylat-System für Bodenbeschichtungen, insbesondere Fußbodenbeschichtungen. Die Erfindung bezieht sich auch auf Bodenbeschichtungen, insbesondere beschichtete Fußböden, welche unter Verwendung eines entsprechenden geruchsverminderten, polymerisierbaren, kalthärtenden, reaktiven (Meth)acrylat-Systems erhältlich sind. Schließlich umfaßt die Erfindung auch Verfahren zur Herstellung dieser beschichteten Böden, insbesondere von Fußböden.

Die Verarbeitung von Reaktionsharzen auf Basis von Methylmethacrylat zu Fußbodenbeschichtungen geht normalerweise mit einer starken Geruchsbelästigung einher. Häufig können MAK-Grenzwerte nicht eingehalten werden.

Geruchsverminderte Methacrylat-Systeme sind bereits Stand der Technik. So offenbart beispielsweise die japanische Offenlegungsschrift JP 95-46571 ein System, das ungesättigte Harze, Cyclopentadienyl(meth)acrylate, Vernetzungsmittel, wie beispielsweise organische Peroxide, und Beschleuniger, wie beispielsweise Metallsalze organischer Säuren, enthält.

Gezeigt wurde, daß ein System, das Cumolhydroperoxid und Cobaltoctoat als Härter und Beschleuniger umfaßt, härtet.

Weitere Systeme, die ebenfalls Cumolhydroperoxid und Cobaltoctoat verwenden, werden von den japanischen Offenlegungsschriften JP 95-5661 und JP 94-199 427 beschrieben.

Diese Systeme lösen zwar das Problem der Geruchsbelästigung, aber eine Gesundheitsgefährdung beim Auftragen dieser Systeme bleibt durch die Verwendung des problematischen Startsystems aus Co-Verbindung und Cumolhydroperoxid bestehen.

In Anbetracht des Standes der Technik ist es nun Aufgabe der vorliegenden Erfindung geruchsverminderte, kalthärtende (Meth)acrylat-Reaktionsharze für Bodenbeschichtungen zur Verfügung zu stellen, die bei dem Auftragen eine besonders geringe Gesundheitsgefährdung zeigen.

Gelöst werden diese sowie weitere nicht explizit genannte Aufgaben, die jedoch aus den hierin diskutierten Zusammenhängen ohne weiteres ableitbar oder erschließbar sind, durch ein im Anspruch 1 beschriebenes Reaktionsharz. Zweckmäßige Abwandlungen des erfindungsgemäßen Reaktionsharzes werden in den auf Anspruch 1 rückbezogenen Unteransprüchen unter Schutz gestellt. Hinsichtlich der Bodenbeschichtung liefert der Gegenstand des Anspruchs 7 eine Lösung der zugrundeliegenden Aufgabe während Anspruch 8 ein besonderes Verfahren zur Herstellung einer geruchsverminderten Bodenbeschichtung schützt.

Dadurch, daß ein geruchsvermindertes, kalthärtendes (Meth)acrylat-Reaktionsharz für Bodenbeschichtungen aus
A)

| | |
|---|---|
| (Meth)acrylat | 50 - 100 Gew.-% |
| Methyl(meth)acrylat | 0 - 5 Gew.-% |
| Ethyl(meth)acrylat | 0 - 5 Gew.-% |
| C₃ - C₆ (Meth)acrylat | 0 - 97 Gew.-% |
| ≥ C₇ (Meth)acrylat | 0 - 50 Gew.-% |
| mehrwertige (Meth)acrylate | 3 - 10 Gew.-% |
| Comonomere | 0 - 50 Gew.-% |
| Vinylaromaten | 0 - 30 Gew.-% |
| Vinylester | 0 - 30 Gew.-%, |

wobei die Bestandteile der Komponente A) 100 Gew.-% ergeben,
B) 0 - 2 Gewichtsteilen auf 1 Gewichtsteil A) eines in A) löslichen oder quellbaren (Pre)polymers, wobei der Anteil an Methyl(meth)acrylat oder an Ethyl(meth)acrylat < 5 Gew.-%, bezogen auf B), beträgt,
C) 2 bis 5 Gewichtsteilen auf 100 Gewichtsteile (A + B) mindestens eines Paraffins und/oder Wachses,
D) einem bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A) und
E) üblichen Additiven besteht, gelingt es auf nicht ohne weiteres vorhersehbare Weise die Gesundheitsgefährdung beim Auftragen dieser Systeme zu verringern. Zugleich lassen sich durch geeignete Auswahl der einzelnen Bestandteile nach Art und Menge erfindungsgemäße Reaktionsharze für Bodenbeschichtungen mit einem insgesamt hervorragenden Eigenschaftsspektrum herstellen:
- vollständige Aushärtung auf unterschiedlichen Substraten, so daß nach 0,5 bis 5 Stunden, bevorzugt etwa 2 Stunden das Reaktionsharz nicht mehr klebrig ist;
- schnelle Aushärtung durch Verwendung von bestimmten Beschleunigern und Initiatoren;
- gute Haftung auf vielen Substraten, wie Kunststoffen, Estrichen, Beton; und
- weitestgehende Geruchsarmut.

In zweckmäßiger, erfindungsgemäßer Abwandlung ist das Reaktionsharz dadurch gekennzeichnet, daß die Komponente E) in einer Menge im Bereich von 0 bis 100 Gewichtsteilen auf 10 Gewichtsteile der Komponenten A) + B) vorhanden ist.

Eine günstige Ausführungsform der Erfindung sieht vor, daß die Komponente A) Butylmethacrylat und 1,4-Butandioldimethylacrylat aufweist.

Eine weitere Verbesserung beim Reaktionsharz der Erfindung ergibt sich durch den optionellen Zusatz von (Pre)polymeren auf Basis von (Meth)acrylaten.

Von besonderem Interesse sind auch erfindungsgemäße Harze, wobei der Anteil der Komponente C) 2,5 bis 3,5 Gewichtsteile auf 100 Gewichtsteile der Summe aus A) + B) beträgt.

Weiters ist es ausgesprochen zweckmäßig, wenn als Komponente D) des Harzes ein System aus Aminen, insbesondere n,n-Bis(2-Hydroxyethyl)-p-toluidin, und Dibenzoylperoxid verwendet wird.

Ein weiterer Aspekt der vorliegenden Erfindung ist in geruchsverminderten Bodenbeschichtungen zu sehen, die durch Auftragen und Aushärten eines polymerisierbaren, bei Temperaturen von -10 bis +45 °C kalthärtbaren, erfindungsgemäßen (Meth)acrylat-Systems erhältlich sind.

Gegenstand der Erfindung ist auch ein Verfahren zur Herstellung einer geruchsverminderten Bodenbeschichtung, wobei man ein geruchsvermindertes, kalthärtendes (Meth) acrylat-Reaktionsharz für Bodenbeschichtungen bestehend aus
A)

| | |
|---|---|
| (Meth)acrylat | 50 - 100 Gew.-% |
| Methyl(meth)acrylat | 0 - 5 Gew.-% |
| Ethyl(meth)acrylat | 0 - 5 Gew.-% |
| C₃ - C₆ (Meth)acrylat | 0 - 97 Gew.-% |
| ≥ C₇ (Meth)acrylat | 0 - 50 Gew.-% |
| mehrwertige (Meth)acrylate | 3 - 10 Gew.-% |
| Comonomere | 0 - 50 Gew.-% |
| Vinylaromaten | 0 - 30 Gew.-% |
| Vinylester | 0 - 30 Gew.-%, |

wobei die Bestandteile der Komponente A) 100 Gew.-% ergeben,
B) 0 - 2 Gewichtsteilen auf 1 Gewichtsteil A) eines in A) löslichen oder quellbaren (Pre)polymers, wobei der Anteil an Methyl(meth)acrylat oder an Ethyl(meth)acrylat < 5 Gew.-%, bezogen auf B), beträgt,
C) 2 bis 5 Gewichtsteilen auf 100 Gewichtsteile (A + B) mindestens eines Paraffins und/oder Wachses,
D) einem bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A) und
E) üblichen Additiven auf eine zu beschichtende Fläche aufträgt und aushärten läßt.

In besonders vorteilhaften Ausführungsform des erfindungsgemäßen Verfahrens kann das Aushärten bei Umgebungstemperatur erfolgen.

### Die Komponente A)

Bei der Komponente A) des erfindungsgemäßen Reaktionsharzes für Bodenbeschichtungen handelt es sich im wesentlichen um ethylenisch ungesättigte Monomere. Diese können eine oder mehrere reaktive Doppelbindungen enthalten.

Mindestens 50 Gew.-% dieser Monomere sind (Meth) acrylate, wobei im Rahmen der Erfindung "(Meth)acrylat" für Acrylat und/oder Methacrylat steht.

Als Ester der Acrylsäure oder Methacrylsäure kommen für die Erfindung ausschließlich solche mit einem bei Raumtemperatur relativ hohen Dampfdruck in Frage. In der Regel handelt es sich um Verbindungen mit einem Siedepunkt von mehr als 120 °C bei Normaldruck, vorzugsweise mehr als 140 °C, besonders zweckmäßig mehr als 150 °C. Der Alkoholrest kann Heteroatome enthalten, beispielsweise in Form von Ether-, Alkohol-, Carbonsäure-, Ester- und Urethangruppen.

Hierbei ist wichtig, daß die Komponente A) nur geringe Mengen (d.h. < 5 Gew.-%) an Methyl(meth)acrylat oder an Ethyl(meth)acrylat aufweist. Vorzugsweise enthält die Komponente A) kein Methyl(meth)acrylat oder Ethyl(meth)acrylat.

Beispiele für im Rahmen der Erfindung einsetzbare Acrylate umfassen u. a. Alkylacrylate, wie 2-Methyl-cis-acrylsäureester (iso-Crotonsäureester), 2-Methyl-trans-acrylsäureester (Crotonsäureester);
Acrylate von halogenierten Alkoholen, wie Acrylsäure-1-trifluormethylester;
Arylacrylate, wie ggf. substituierte Benzylacrylate;
ungesättigte Alkylacrylate, wie etwa Allylacrylat.

Zu im Rahmen der Erfindung mit besonderem Erfolg einsetzbaren Methacrylaten gehören
u.a.:
Alkylmethacrylate, die sich von gesättigten Alkoholen ableiten, wie Isopropylmethacrylat, Propylmethacrylat, n-Butylmethacrylat, tert.- Butylmethacrylat, n-Hexylmethacrylat, n-Octylmethacrylat, n-Decylmethacrylat, Isooctylmethacrylat, Tetradecylmethacrylat und der gleichen;
Alkylmethacrylate, die sich von ungesättigten Alkoholen ableiten, wie z. B. Oleylmethacrylat, 2-Propynylmethacrylat, Allylmethacrylat, Vinylmethacrylat usw.;
Amide und Nitrile der Methacrylsäure, wie N-(3-Dimethylaminopropyl)methacrylamid, N-(Diethylphosphono)methacrylamid, 1-Methacryloylamido-2-methyl-2-propanol, N-(3-Dibutylaminopropyl)methacrylamid, N-t-Butyl-N-(diethylphosphono)methacrylamid, N, N-bis(2-Diethylaminoethyl)methacrylamid, 4-Methacryloylamido-4-methyl-2-pentanol, Methacryloylamidoacetonitril, N-(Methoxymethyl)methacrylamid, N-(2-Hydroxyethyl)methacrylamid, N-Acetylmethacrylamid, N-(Dimethylaminoethyl)methacrylamid, N-Methyl-N-phenylmethacrylamid, N,N-Diethylmethacrylamid, N-Methylmethacrylamid, N,N-Dimethylmethacrylamid, N-Isopropylmethacrylamid;
Aminoalkylmethacrylate, wie tris (2-Methacryloxyethyl )amin, N-methylformamidoethylmethacrylat, 3-Diethylaminopropylmethacrylat, 2-Ureidoethylmethacrylat;
andere stickstoffhaltige Methacrylate, wie N-(Methacryloyloxyethyl)diisobutylketimin, 2-Methacryloyloxyethylmethylcyanamid, Cyanomethylmethacrylat;
Arylmethacrylate, wie Nonylphenylmethacrylat, Benzylmethacrylat, Phenylmethacrylat, wobei die Arylreste jeweils unsubstituiert oder bis zu vierfach substituiert sein können;
carbonylhaltige Methacrylate, wie 2-Carboxyethylmethacrylat, Carboxymethylmethacrylat, N-(2-Methacryloyloxyethyl)-2-pyrrolidinon, N-(3-Methacryloyloxypropyl)-2-pyrrolidinon, N-Methacryloylmorpholin, Oxazolidinylethylmethacrylat, N-(Methacryloyloxy)formamid, Acetonylmethacrylat, N-Methacryloyl-2-pyrrolidinon;
Cycloalkylmethacrylate, wie 3-Vinylcyclohexylmethacrylat, 3,3,5-Trimethylcyclohexylmethacrylat, Bornylmethacrylat, Cyclopenta-2,4-dienylmethacrylat, Isobornylmethacrylat, 1-Methylcyclohexylmethacrylat;
Glycoldimethacrylate, wie 1, 4 -Butandiolmethacrylat, Methylenmethacrylat, 1,3-Butandiolmethacrylat, Triethylenglycolmethacrylat, 2,5-Dimethyl-1,6-hexandiolmethacrylat, 1,10-Decandiolmethacrylat, 1, 2-Propandiolmethacrylat, Diethylenglycolmethacrylat, Ethylenglycolmethacrylat;
Hydroxylalkylmethacrylate, wie 3-Hydroxypropylmethacrylat, 3,4-Dihydroxybutylmethacrylat, 2-Hydroxyethylmethacrylat, 2-Hydroxypropylmethacrylat;
Methacrylate von Etheralkoholen, wie Tetrahydrofurfurylmethacrylat, Vinyloxyethoxyethylmethacrylat, Methoxyethoxyethylmethacrylat, 1-Butoxypropylmethacrylat, 1-Methyl-(2-vinyloxy)ethylmethacrylat, Cyclohexyloxymethylmethacrylat, Methoxymethoxyethylmethacrylat, Benzyloxymethylmethacrylat, Furfurylmethacrylat, 2-Butoxyethylmethacrylat, 2-Ethoxyethoxymethylmethacrylat, 2-Ethoxyethylmethacrylat, Allyloxymethylmethacrylat, 1-Ethoxybutylmethacrylat, Methoxymethylmethacrylat, 1-Ethoxyethylmethacrylat, Ethoxymethylmethacrylat;
Methacrylate von halogenierten Alkoholen, wie 2,3-Dibromopropylmethacrylat, 4-Bromophenylmethacrylat, 1,3-Dichloro-2-propylmethacrylat, 2-Bromoethylmethacrylat, 2-Iodoethylmethacrylat, Chloromethylmethacrylat;
Oxiranylmethacrylate, wie 10,11-Epoxyundecylmethacrylat, 2,3-Epoxycyclohexylmethacrylat, 2,3-Epoxybutylmethacrylat, 3,4-Epoxybutylmethacrylat, Glycidylmethacrylat;
Phosphor-, Bor- und/oder Silicium-haltige Methacrylate, wie 2-(Dibutylphosphono)ethylmethacrylat, 2,3-Butylenmethacryloylethylborat, 2-(Dimethylphosphato)propylmethacrylat, Methyldiethoxymethacryloylethoxysilan, 2-(Ethylenphosphito)propylmethacrylat, Dimethylphosphinomethylmethacrylat, Dimethylphosphonoethylmethacrylat, Diethylmethacryloylphosphonat, Diethylphosphatoethylmethacrylat, Dipropylmethacryloylphosphat;
schwefelhaltige Methacrylate, wie Ethylsulfinylethylmethacrylat, 4-Thiocyanatobutylmethacrylat, Ethylsulfonylethylmethacrylat, Thiocyanatomethylmethacrylat, Methylsulfinylmethylmethacrylat, Bis(methacryloyloxyethyl)sulfid;
Trimethacrylate, wie Trimethyloylpropantrimethacrylat.

Den Methacrylaten entsprechende Acrylate, die einen Siedepunkt größer als 120 °C aufweisen, können ebenfalls verwendet werden.

Die genannten Verbindungen können auch als Mischungen verwendet werden. (Meth)acrylate deren Alkoholrest drei bis fünf Kohlenstoffatome enthält sind bevorzugt. Längerkettige Ester, also Verbindungen deren Alkoholrest 7 oder mehr Kohlenstoffatome aufweist, machen die Beschichtungen zwar flexibler, aber auch weicher, so daß ihre Gebrauchseigenschaften eingeschränkt werden. Ihr Anteil ist daher auf 50 Gew.-% beschränkt.

Zu den besonders bevorzugten (Meth)acrylate gehören unter anderem n-Butylmethacrylat, tert.-Butylmethacrylat, Isobutylmethacrylat, Hexylmethacrylat, Hexylacrylat, Cyclohexylmethacrylat, Cyclohexylacrylat, Benzylmethacrylat und Benzylacrylat.

Die Komponente A) enthält als erfindungswesentlichen Bestandteil zwischen 3 und 10 Gew.-% eines oder mehrerer mehrwertiger (Meth) acrylate.

Hierzu zählen unter anderem Di-, tri- und mehrfachfunktionelle Verbindungen. Besonderen Vorzug genießen difunktionelle (Meth)acrylate sowie trifunktionelle (Meth)acrylate.

### (a) Difunktionelle (Meth)acrylate

Verbindungen der allgemeinen Formel: 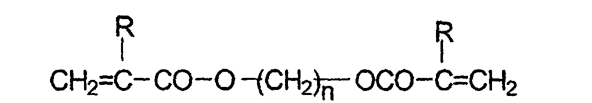 worin R Wasserstoff oder Methyl ist und n eine positive ganze Zahl zwischen 3 und 20, wie z. B. Di(meth)acrylat des Propandiols, Butandiols, Hexandiols, Octandiols, Nonandiols, Decandiols und Eicosandiols;
Verbindungen der allgemeinen Formel: 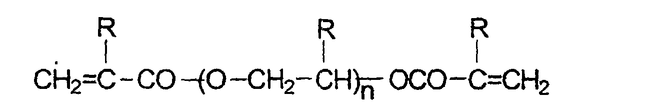 worin R Wasserstoff oder Methyl ist und n eine positive ganze Zahl zwischen 1 und 14 bedeutet, wie z. B. Di(meth)acrylat des Ethylenglycols, Diethylenglycols, Triethylenglycols, Tetraethylenglycols, Dodecaethylenglycols, Tetradecaethylenglycols, Propylenglycols, Dipropylglycols und Tetradecapropylenglycols;
und Glycerindi(meth)acrylat, 2,2'-Bis[p-(γ-methacryloxy-β-hydroxypropoxy)-phenylpropan] oder Bis-GMA, Biphenol-A-dimethacrylat, Neopentylglycoldi (meth)acrylat, 2,2'-Di(4-methacryloxypolyethoxyphenyl)propan mit 2 bis 10 Ethoxygruppen pro Molekül und 1,2-Bis(3-methacryloxy-2-hydroxypropoxy)butan.

### (b) Tri- oder mehrfachfunktionelle (Meth)acrylate

Trimethylolpropantri (meth) acrylate und Pentaerythritoltetra(meth)acrylat.

### (c) Urethan(meth)acrylate

Umsetzungsprodukte von 2 Mol hydroxylgruppenhaltigem (Meth)acrylatmonomer mit einem Mol Diisocyanat und Umsetzungsprodukte eines zwei NCO Endgruppen aufweisenden Urethanprepolymers mit einem methacrylischen Monomer, das eine Hydroxylgruppe aufweist, wie sie z. B. durch die allgemeine Formel wiedergegeben werden: 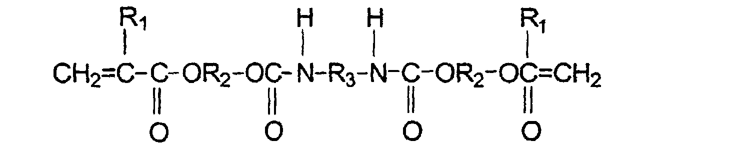 worin R Wasserstoff oder eine Methylgruppe bedeutet, R₂ eine Alkylengruppe und R₃ einen organischen Rest verkörpert.

Die genannten vernetzend wirkenden Monomeren a) bis c) werden entweder allein oder in Form einer Mischung von mehreren Monomeren verwendet.

Zu ganz besonders vorteilhaft im erfindungsgemäßen Harz eingesetzten mehrwertigen Monomeren gehören vor allem Trimethylolpropantrimethacrylat (TRIM) , 2,2-Bis-4(3-methacryloxy-2-hydroxypropoxy) -phenylpropan (Bis-GMA), 3, 6-Dioxaoctamethylendimethacrylat (TEDMA), 7,7,9-Trimethyl-4,13-dioxo-3,14-dioxa-5,12-diaza-hexadecan-1,16-dioxy-dimethacrylat (UDMA) und/oder 1,4-Butandioldimethacrylat (1,4-BDMA). Von diesen ist wiederum 1,4-Butandioldimethacrylat bei weitem bevorzugt.

Die Komponente A) kann des weiteren auch andere Comonomere enthalten, die mit oben genannten (Meth)acrylaten copolymerisierbar sind. Zu diesen gehören u.a. Vinylester, Vinylchlorid, Vinylidenchlorid, Vinylacetat, Styrol, substituierte Styrole mit einem Alkylsubstituenten in der Seitenkette, wie z.B. α-Methylstyrol und α-Ethylstyrol, substituierte Styrole mit einem Alkylsubstituenten am Ring, wie beispielsweise Vinyltoluol und p-Methylstyrol, halogenierte Styrole, wie beispielsweise Monochlorstyrole, Dichlorstyrole, Tribromstyrole und Tetrabromstyrole, Vinyl-und Isopropenylether, Maleinsäurederivate, wie beispielsweise Maleinsäureanhydrid, Methylmaleinsäureanhydrid, Maleinimid, Methylmaleinimid, Phenylmaleinimid und Cyclohexylmaleinimid, und Diene, wie beispielsweise 1,3-Butadien und Divinylbenzol.

Der Anteil der Comonomere ist auf 50 Gew.-% der Komponente A) beschränkt, da andernfalls die mechanischen Eigenschaften der auspolymerisierten Beschichtungen nachteilig beeinflußt werden können. Der Anteil der Vinylaromaten ist hierbei auf 30 Gew.-% der Komponente A) begrenzt, da höhere Anteile zu einer Entmischung des Systems führen können. Der Anteil der Vinylester ist ebenfalls auf 30 Gew.-% der Komponente A) limitiert, da diese bei tiefen Temperaturen nur ungenügend durchhärten und zu einem ungünstigen Schrumpfverhalten neigen.

Alle oben genannten Monomere, die in der Komponenten A) enthalten sind, sind kommerziell erhältlich.

### Die Komponente B)

Zur Einstellung der Viskosität des Reaktionsharzes und der Verlaufseigenschaften sowie zur besseren Härtung oder anderen Eigenschaften des Harzes oder der auspolymerisierten Beschichtung kann der Komponenten A) ein Polymer oder ein Prepolymer zugegeben werden. Dieses (Pre)polymer soll in der Komponenten A) löslich oder quellbar sein. Auf ein Gewichtsteil A) können zwischen 0 und 2 Gewichtsteile des (Pre)polymers eingesetzt werden.

Insbesondere sind z.B. Poly(meth)acrylate als Komponente B) geeignet, die als festes Polymerisat in A) gelöst werden können. Sie können ebenfalls als sogenannte Sirupe, d.h. als teilweise polymerisierte Massen entsprechender Monomere verwendet werden. Hierbei ist wichtig, daß diese Massen nur geringe Mengen (d.h. < 5 Gew.-%) an Methyl(meth)acrylat oder an Ethyl(meth)acrylat aufweisen. Vorzugsweise enthält die Komponente B) kein Methyl(meth)acrylat oder Ethyl (meth) acrylat.

Weiterhin sind u.a. Polyvinylchloride, Polyvinylacetate, Polystyrole, Epoxydharze, Epoxyd(meth)acrylate, ungesättigte Polyester, Polyurethane oder Mischungen hiervon oder mit oben genannten Poly(meth)acrylaten als Komponente B) geeignet. Die genannten (Pre)polymere können auch als Copolymere eingesetzt werden.

Zu im Rahmen der Erfindung mit besonderem Erfolg einsetzbaren (Pre)polymeren gehören u.a. Bindemittel auf Basis von (Meth)acrylaten, die kein Monomer freisetzen, wie beispielsweise ®PLEXIGUM PM 381, welches von der Firma Röhm GmbH erhältlich ist.

Diese Polymere dienen beispielsweise zur Regulierung der Flexibilitätseigenschaften, der Schrumpfregulierung, als Stabilisator, als Hautbildner sowie als Verlaufsverbesserer.

Die oben genannten (Pre)polymere sind im allgemeinen kommerziell erhältlich. Sie können aber auch auf dem Fachmann bekannte Weise hergestellt werden.

Vorzugsweise enthalten Reaktionsharze, die zur Herstellung dünner Beschichtungen einer Dicke unter 5 mm entwickelt werden, bevorzugt mindestens 1 Gew.-%, besonders bevorzugt mindestens 3 Gew.-% eines Polymers, z.B. eines Poly(meth)acrylats, bezogen auf die Summe A) + B.

### Die Komponente C)

Methacrylatharze neigen bei der Aushärtung zur Luftinhibierung. Dies führt dazu, daß die oberen Harzschichten, die mit Luft in Kontakt treten können, in erhöhtem Maße klebrig bleiben und nicht fest werden, wie der Rest der Masse. Zur Verhinderung bzw. Verbesserung dieses Verhaltens werden daher dem Harz Paraffine und/oder Wachse zugesetzt, die sich in ihrer Konzentration bevorzugt nahe der Löslichkeitsgrenze befinden. Beim Verdampfen von Rezepturbestandteilen wird die Löslichkeitsgrenze überschritten, es bildet sich ein feiner Paraffinfilm auf der Oberfläche, welcher eine Luftinhibierung der oberen Harzschichten wirksam verhindert und so zu einer trockenen Oberfläche führt.

Bei Wachsen und Paraffinen handelt es sich im allgemeinen um unpolare Substanzen, die sich im flüssigen, unausgehärteten Harz lösen. Mit zunehmender Vernetzung während der Polymerisation nimmt ihre Verträglichkeit mit dem Harz ab, so daß sie eine zweite Phase bilden und an die Oberfläche der polymerisierenden Harzmasse migrieren können. Sie sind dann in der Lage, einen geschlossenen Film an der Oberfläche zu bilden, und können diese Masse gegenüber dem Luftsauerstoff absperren. Durch diesen Ausschluß des Sauerstoffs wird die Auspolymerisation des Harzes an seiner Oberfläche unterstützt. Insbesondere verringert der Zusatz von Wachsen und/oder Paraffinen somit die Klebrigkeit der Oberfläche, daß der Inhibitorwirkung von Sauerstoff entgegengewirkt werden kann.

Prinzipiell sind alle Substanzen geeignet, die das oben beschriebene Verhalten einer homogenen Oberflächenschichtbildung bei Unterschreitung der Löslichkeitsgrenzen zeigen.

Zu geeigneten Wachsen gehören unter anderem Paraffin, mikrokristallines Wachs, Carnauba-Wachs, Bienenwachs, Lanolin, Walfischtran, Polyolefinwachse, Ceresin, Candelilla-Wachs und dergleichen.

Als besonders geeignet haben sich aber Paraffine erwiesen. Diese bestehen überwiegend aus geradkettigen Kohlenwasserstoffen der allgemeinen Formel CₙH₂ₙ₊₁ mit n = 10 - 70 und einem Anteil an iso- und Cycloalkanen/-paraffinen von 0 bis 60 %. Diese aus den Vakuumdestillationsschnitten leichter und mittlerer Schmieröle erhaltenen Wachse besitzen den Vorteil, daß sie unter den in (Meth)acrylatharzen vorherrschenden Bedingungen extrem unreaktiv sind. Sie sind unlöslich in Wasser und kaum löslich in niedermolekularen aliphatischen Alkoholen und Ethern. Sie sind besser löslich in Ketonen, Chlorkohlenwasserstoffen, Benzin, Benzol, Toluol, Xylol und höheren Aromaten. Die Löslichkeit nimmt mit höherem Schmelzpunkt, d. h. mit zunehmender Molmasse des Wachses ab. Die Erweichungspunkte der makrokristallinen Paraffine liegen zwischen 35 und 72. Die marktüblichen Produkte zeigen Viskositäten bei 100 °C zwischen 2 und 10 mm²/s.

Bevorzugt für den Einsatz in den erfindungsgemäßen Methacrylatharzen für die Bodenbeschichtung haben sich unter anderem vollständig raffinierte und entölte Wachse erwiesen. Der Ölgehalt dieser Typen liegt maximal bei 2,5 %. Besonderer Vorzug wird Produkten mit einem Erweichungspunkt zwischen 40 und 60 °C und einer Viskosität bei 100 °C von 2,0 bis 5,5 mm²/s gegeben.

Erfindungsgemäß werden die Wachse und/oder Paraffine in Mengen von 2,0 bis 5 Gew.-%, bevorzugt 3 Gew.-%, bezogen auf das Gesamtgewicht der Komponenten A) bis B), zugesetzt. Überschreitet die zugesetzte Menge an Wachs und/oder Paraffin eine Menge von 5 Gew.-% deutlich, so kann dies einen nachteiligen Einfluß auf die Festigkeit der Bodenbeschichtung haben. Unterschreitet die zugesetzte Menge an Wachs und/oder Paraffin eine Menge von 2 Gew.-%, so härten die geruchsverminderten Harze nicht klebefrei aus.

Da die Paraffine und/oder Wachse durch Verdunstung ihre erfindungsgemäße Wirkung zeigen, ist es notwendig, daß die Komponente A) genügend Verdunstung aufweist. Daher sind Monomere (Meth)acrylat mit Estergruppen, welche mit C₃ - C₆ C-Atome aufweisen, besonders bevorzugt.

### Die Komponente D)

Das erfindungsgemäße Harz A) bis D) ist zur Kalthärtung geeignet, d.h. zur Polymerisation enthält es ein Redoxsystem aus einem Beschleuniger und einem peroxidischen Katalysator oder Initiator. Die Mengen, in denen diese Beschleuniger und Initiatoren zugegeben werden, sind vom jeweiligen System abhängig und vom Fachmann durch Routineuntersuchungen zu ermitteln. Sie müssen jedoch zur Kalthärtung der Komponente A) ausreichen.

Der Beschleuniger wird üblicherweise in einer Menge von 0,01 bis 5 Gew.-%, vorzugsweise 0,5 bis 1,5 Gew.-%, bezogen auf die Summe aus den Komponenten A) bis D), eingesetzt. Zu den als Beschleuniger besonders geeigneten Verbindungen gehören unter anderem Amine und Mercaptane, wie beispielsweise Dimethyl-p-toluidin, Diisopropoxy-p-toluidin, n,n-Bis(2-Hydroxyethyl)-p-toluidin, Dimethylanilin und Glykoldimercaptoacetat, wobei n,n-Bis(2-Hydroxyethyl)-p-toluidin und Dimethyl-p-toluidin ganz besonders bevorzugt sind.

Des weiteren können als Beschleuniger organische Metallsalze dienen, die überlicherweise im Bereich von 0,001 bis 2 Gew.-%, bezogen auf die Summe aus den Komponenten A) bis D), eingesetzt werden. Zu diesen gehören u.a. Kupfernaphthenat und Kupferoleat.

Als peroxidischer Katalysator oder Initiator eignen sich insbesondere Verbindungsgruppen wie Ketonperoxide, Diacylperoxide, Perester, Perketale sowie Mischungen von Verbindungen dieser Gruppen miteinander sowie mit nicht genannten wirksamen Härtern und Initiatoren.

Besonders bevorzugt sind für diesen Zweck Verbindungen wie Methylethylketonperoxid, Acetylacetonperoxid, Ketonperoxid, Methylisobutylketonperoxid, Cyclohexanonperoxid, Dibenzoylperoxid, tert-Butylperoxybenzoat, tert-Butylperoxy isopopyl carbonat, 2,5-Bis(2-ethylhexanoyl-peroxy)-2,5-dimethylhexan, tert-Butylperoxy-2-ethylhexanoat, tert-Butylperoxy-3,5,5-trimethylhexanoat, 1,1-Bis(tert-butylperoxy)cyclohexan, 1,1-Bis (tert-butylperoxy)3,3,5-trimethylcyclohexan, Cumylhydroperoxid, tert-Butylhydroperoxid, Dicumylperoxid, Bis(4-tert-butylcyclohexyl)peroxydicarbonat, Mischungen aus Keton-Peroxid-Typen, Perester-Typen, sowie Mischungen von zwei oder mehr der vorgenannten Verbindungen miteinander. Von den oben genannten Verbindungen ist Dibenzoylperoxid bevorzugt.

Die Initiatoren werden üblicherweise in einer Menge im Bereich von 0,1 bis 10 Gew.-%, vorzugsweise von 0,5 bis 5 Gew.-%, bezogen auf die Summe aus den Komponenten A) bis D), eingesetzt. Im Harz können von der Komponente D) schon die Beschleuniger, z. B. Dimethylparatoluidin, enthalten sein, ohne daß eine Polymerisation bei Umgebungstemperatur stattfindet. Durch Zugabe der restlichen Bestandteile der Komponente D) wird die Reaktion gestartet, wobei die Komponente D) üblicherweise so bemessen ist, daß das (Meth)acrylat-System eine Topfzeit von 10 min bis 20 min hat. Das erfindungsgemäße (Meth)acrylat-System enthält also nur unmittelbar vor der Anwendung die vollständige Komponente D), bis zum Gebrauch ist die Komponente D) nicht oder nur zum Teil enthalten, oder mit anderen Worten, das vollständige funktionsfähige Redoxsystem ist bis zur Polymerisation der polymerisierbaren Bestandteile von diesen fernzuhalten, während einzelne Bestandteile des Redoxsystems bereits mit polymerisierbaren Substanzen vorgemischt sein können.

### Die Komponente E)

Die Komponente E) ist optionell. Hierzu gehören eine Vielzahl von in (Meth)acrylat-Reaktionsharz für Bodenbeschichtungen üblichen Additiven. Beispielhaft seien nur genannt:
Abbindemittel, Antistatika, Antioxidantien, Biostabilisatoren, chemische Treibmittel, Entformungsmittel, Flammschutzmittel, Schmiermittel, Farbmittel, Fließverbesserungsmittel, Füllstoffe, Gleitmittel, Haftvermittler, Inhibitoren, Katalysatoren, Lichtschutzmittel, optische Aufheller, organische Phosphite, Öle, Pigmente, Schlagzähigkeitsverbesserer, Verstärkungsmittel, Verstärkungsfasern, Verwitterungsschutzmittel und Weichmacher.

Diese optionellen Additive können in wechselnden Mengen im erfindungsgemäßen Harz enthalten sein. Einige Additive sind im Rahmen der Erfindung besonders bevorzugt, wie beisielsweise die Zusatzstoffe der Gruppen E1) bis E4).

### Die Gruppe E1)

Besonderes Interesse als Zusätze zu den erfindungsgemäßen Harzen verdient die Gruppe der Inhibitoren E1).

Der polymerisierbaren Harzmischung können zum Schutz vor unerwünschter, vorzeitiger Aushärtung Inhibitoren zugesetzt werden. Diese wirken als Radikalkettenabbruchreagenzien zum Abfangen der üblicherweise vorhandenen Radikale und erhöhen die Lagerfähigkeit der Harzzubereitungen erheblich. Bei gewollt durch Zugabe organischer Peroxide initiierter Aushärtung besitzen die zugefügten Inhibitoren jedoch den Vorteil, schnell überfahrbar zu sein. Eingesetzt werden hauptsächlich 1,4-Dihydroxybenzole. Es können jedoch auch anders substituierte Dihydroxybenzole zum Einsatz kommen. Allgemein lassen sich derartige Inhibitoren mit der allgemeinen Formel (E1.I) wiedergeben 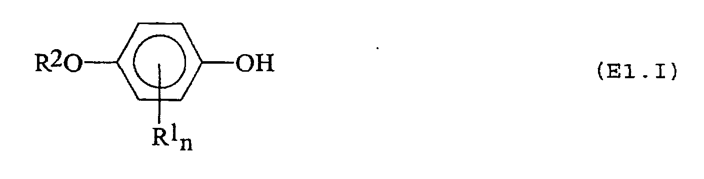 worin
R¹ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br;
n eine ganze Zahl im Bereich von eins bis vier, vorzugsweise eins oder zwei ist; und
R² Wasserstoff, einen linearen oder verzweigten Alkylrest mit eins bis acht Kohlenstoffatomen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl oder tert.-Butyl.

Es können jedoch auch Verbindungen mit 1,4-Benzochinon als Stammverbindung eingesetzt werden. Diese lassen sich mit der Formel (E1.II) beschreiben 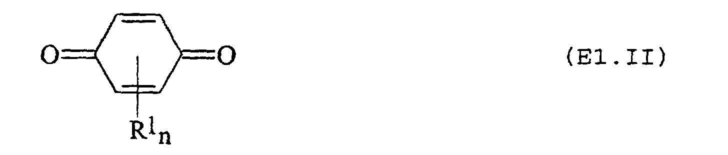 worin
R¹ einen linearen oder verzweigten Alkylrest mit eins bis acht Kohlenstoffatomen, Halogen oder Aryl bedeutet, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, Cl, F oder Br; und
n eine ganze Zahl im Bereich von eins bis vier, vorzugsweise eins oder zwei ist.

Ebenso werden Phenole der allgemeinen Struktur (E1.III) eingesetzt 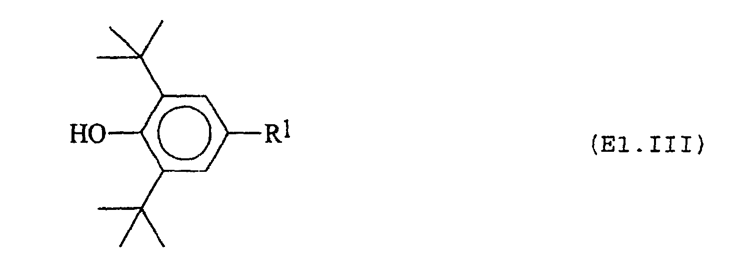 worin
R¹ einen linearen oder verzweigten Alkylrest mit eins bis acht Kohlenstoffatomen, Aryl oder Aralkyl, Proprionsäureester mit 1 bis 4 wertigen Alkoholen, welche auch Heteroatome wie S, O und N enthalten können, vorzugsweise einen Alkylrest mit eins bis vier Kohlenstoffatomen, besonders bevorzugt Methyl, Ethyl, n-Propyl, iso-Propyl, n-Butyl, iso-Butyl, sec-Butyl, tert.-Butyl, bedeutet.

Eine weitere vorteilhafte Substanzklasse stellen gehinderte Phenole auf Basis von Triazinderivaten der Formel (E1.IV) dar 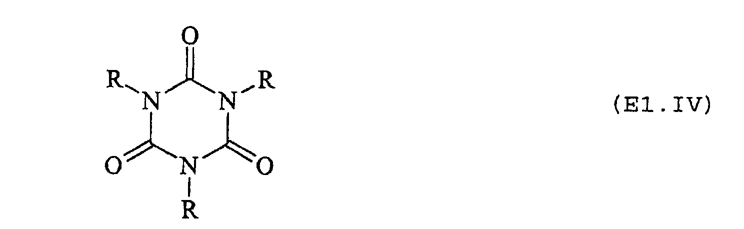 mit R = Verbindung der Formel (E1.V) 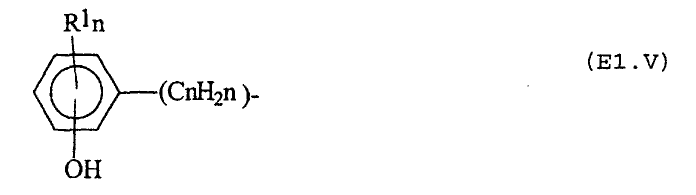 worin
R¹ = CₙH₂ₙ₊₁
mit n = 1 oder 2 ist.

Besonders erfolgreich werden die Verbindungen 1,4-Dihydroxybenzol, 4-Methoxyphenol, 2,5-Dichloro-3,6-dihydroxy-1,4-benzochinon, 1,3,5-Trimethyl-2,4,6-tris-(3,5-di-tert.butyl-4-hydroxybenzyl)benzol, 2,6-Di-tert. butyl-4-methylphenol, 2,4-Dimethyl-6-tert. butylphenol, 2,2-Bis [3,5-Bis(1,1-dimethylethyl)-4-hydroxyphenyl-1-oxoperopoxymethyl)]1,3-propandiylester, 2,2'-Thiodiethylbis-[3-(3,5-di-tert.butyl-4-hydroxyphenyl)] propionat, Octadecyl-3-(3,5-di-tert.butyl-4-hydroxyphenyl) propionat, 3,5-Bis(1,1-dimethylethyl-2,2-Methylenbis-(4-methyl-6-tert.butyl)phenol, Tris- (4-tert.butyl-3-hydroxy-2,6-dimethylbenzyl)-s-triazin-2,4,6-(1H,3H,5H)trion, Tris (3,5-ditert.butyl-4-hydroxy)-s-triazin-2,46-(1H, 3H,5H) trion oder tert Butyl-3,5-dihydroxybenzol eingesetzt.

Bezogen auf das Gewicht der Gesamtrezeptur des Harzes beträgt der Anteil der Inhibitoren einzeln oder als Mischung im allgemeinen 0,0005 - 1,3 % (wt/wt).

### Die Gruppe E2)

Noch eine wichtige Substanzgruppe innerhalb der Additive und Zusatzstoffe sind die Füllstoffe E2).

Als Füllstoffe und/oder Pigmente in der flüssigen Harzzubereitung eignen sich alle üblichen Zusätze wie z. B. natürliche und synthetische Calciumcarbonate, Dolomite, Calciumsulfate, Silikate wie z. B. Aluminiumsilikat, Zirkonsilikat, Talkum, Kaolin, Glimmer, Feldspat, Nephelin-Syelit, Wollastonit, aber auch Glaskugeln oder Silikatkugeln, Siliziumdioxid in Form von Sand, Quarz, Quarzit, Novaculit, Perlit, Tripoli und Diatomeenerde, Bariumsulfate, Carbide wie z. B. SiC, Sulfide (z.B. MoS₂, ZnS) oder auch Titanate wie z. B. BaTiO₃, Molybdate wie z B. Zink-, Calcium-, Barium-, Strontiummolybdate, Phosphate wie z.B. Zink-, Calcium, Magnesium. Ebenfalls gut geeignet sind Metallpulver oder Metalloxide wie z. B. Al-Pulver, Silberpulver oder Aluminiumhydroxid. Auch zum Einsatz kommen Ruße, Graphitpulver, Holzmehl, synthetische Fasern (Basis Polyethylenterephthalat, Polyvinylalkohol), Basaltfasern, C-Fasern, Aramidfasern, Polybenzinidazolfasern, PEEK-Fasern, Polyethylenfasern, Borfasern, Keramikfasern. Übliche prozentuale Mengen bezüglich der Gesamtrezeptur liegen zwischen 0 und 60 % wt/wt.

### Die Gruppe E3)

Von besonderem Interesse unter den möglichen Additiven ist auch die Gruppe der Antioxidantien und Wärmestabilisatoren E3).

Diese Verbindungen sind dem Fachmann an sich geläufig. Beispielhaft für eine Vielzahl in Frage kommender Zusätze seien genannt: Chloranilsäure (2,5-Dichloro-3,6-dihydroxy-1,4 benzochinon, Hydrochinon (1,4-Dihydroxybenzol), Irganox 1330 (1,3,5-Trimethyl-2,4,6-tris-(3,5-di-tert.Butyl-4-hydroxybenzyl)benzol, Vulkanox BHT (2,6-Di-tert.butyl-4-methylphenol), 4-tert-Butylbrenzcatechin, Verbindungen der allgemeinen Formel E3.I) 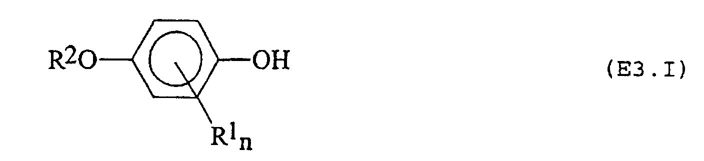 worin n eine ganze Zahl im Bereich von 1 bis 4 ist, R¹ einen substituierten oder unsubstituierten, linearen oder verzweigten Alkylrest mit 1 bis 8 Kohlenstoffatomen, vorzugsweise mit 1 bis 4 Kohlenstoffatomen, einen Arylrest oder Halogen, vorzugsweise Chlor, Fluor oder Brom, bedeutet, und R² Wasserstoff oder eine substituierte oder unsubstituierte, linearer oder verzweigter Alkylrest mit 1 bis 8 Kohlenstoffatomen, vorzugsweise mit 1 bis 4 Kohlenstoffatomen, ist,
Irganox 1010 (3,5-Bis(1,1-dimethylethyl-2,2-Methylenbis-(4-Methyl-6-tert-butyl)phenol),
Irganox 1035 (2,2'-Thiodiethylbis-(3-(3,5-di-tert-butyl-4-hydroxyphenyl)propionat),
Irganox 1076 (Octadecyl-3-(3,5-di-tert butyl-4-hydroxyphenyl)propionat,
Topanol O, Cyanox 1790 (Tris-(4-tert.butyl-3-hydroxy-2,6-dimethylbenzyl)-5-triazin-2,4,6-(1H,3H,5H)trion), Irganox 1098 und dergleichen.

### Die Gruppe E4)

Eine weitere Gruppe von besonderen Zusätzen ist die Gruppe der Weichmacher (E4).

Weichmacher dienen z.B. als Aufnehmer für Peroxidkomponenten für das automatische 2-Komponenten Mischverfahren (Phlegmatisierungsmittel), zur Regulierung der Druck- und Biegezugfestigkeit sowie zum Einstellen der Oberflächenspannung.

Für die Verwendung in (Meth)acrylat-Reaktionsharzen bekannte Weichmacher sind z.B. Phthalsäureester, Adipinsäureester, Chlorparaffine, Harnstoffharze, Melaminharze, modifizierte Phenolate, Polyglykolurethane.

Die erfindungsgemäßen Reaktionsharze können bis zu 7 Gewichtsteile, vorzugsweise bis zu 2 Gewichtsteile eines Weichmachers auf 10 Gewichtsteile der Summe aus A) + B) enthalten.

Geruchsverminderte Bodenbeschichtungen können durch Auftragen und Aushärten eines erfindungsgemäßen polymerisierbaren, bei Temperaturen von -10 bis +45 °C kalthärtbaren (Meth)acrylat-Systems erhalten werden.

Diese können grundsätzlich auf allen festen Untergründen aufgebracht werden, besonders geeignet sind Asphalt, Betonasphalt, Bitumenestrich, Beton, Estrich, Keramikfliesen, Metall, wie beispielsweise Stahl oder Aluminium, sowie Holz. Je nach Art des Untergrundes ist es vorteilhaft vor dem Aufbringen des erfindungsgemäßen Reaktionsharzes eine Grundierung auf den Untergrund aufzutragen. Diese Grundierungen sind in der Fachwelt weithin bekannt und können im allgemeinen kommerziell erhalten werden.

Gegenstand der Erfindung ist auch ein Verfahren zur Herstellung einer geruchsverminderten Bodenbeschichtung, bei dem man ein geruchsvermindertes, kalthärtendes (Meth)acrylat-Reaktionsharz für Bodenbeschichtungen bestehend aus
A)

| | |
|---|---|
| (Meth)acrylat | 50 - 100 Gew.-% |
| Methyl(meth)acrylat | 0 - 5 Gew.-% |
| Ethyl(meth)acrylat | 0 - 5 Gew.-% |
| C₃ - C₆ (Meth)acrylat | 0 - 97 Gew.-% |
| ≥ C₇ (Meth)acrylat | 0 - 50 Gew.-% |
| mehrwertige (Meth)acrylate | 3 - 10 Gew.-% |
| Comonomere | 0 - 50 Gew.-% |
| Vinylaromaten | 0 - 30 Gew.-% |
| Vinylester | 0 - 30 Gew.-%, |

wobei die Bestandteile der Komponente A) 100 Gew.-% ergeben,
B) 0 - 2 Gewichtsteilen auf 1 Gewichtsteil A) eines in A) löslichen oder quellbaren (Pre)polymers, wobei der Anteil an Methyl(meth)acrylat oder an Ethyl(meth)acrylat < 5 Gew.-%, bezogen auf B), beträgt,
C) 2 bis 5 Gewichtsteilen auf 100 Gewichtsteile (A + B) mindestens eines Paraffins und/oder Wachses,
D) einem bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A) und
E) üblichen Additiven auf eine zu beschichtende Fläche aufträgt und aushärten läßt.

Die Aushärtung geschieht im allgemeinen bei Temperaturen im Bereich von -10 bis +45 °C. Solche Harze nennt man kalthärtend.

Eine besonders bevorzugte Ausführungsform des erfindungsgemäßen Verfahrens zeichnet sich dadurch aus, daß das Aushärten bei Umgebungstemperatur (+10 bis + 30 °C)erfolgt.

Nachfolgend wird die Erfindung durch Beispiele und Vergleichsbeispiele eingehender erläutert.

### Beispiele 1 bis 4 sowie Vergleichsbeispiele 1 bis 8

Es wurde eine Zusammensetzung mit folgenden Bestandteilen durch Mischen hergestellt:

| Verbindung | Gewichtsteile |
|---|---|
| n-Butylmethacrylat | 65,8 |
| ® Plexigum PM 381 | 25,0 |
| ® Tinuvin P (2-(2-Hydroxy-5-methylphenyl)benzotriazol) | 0,2 |
| 4-Methyl-2,6-di-tert.-Butylphenol | 0,02 |
| N,N-bis (2-Hydroxyethyl)-p-toluidin | 1,0 |
| Benzylmethacrylat | 0,2 |
| ®Plexigum PM 381 ist ein gemahlenes Substanzpolymerisat auf Basis von Butylmethacrylat und Methylmethacrylat. | |

Zu dieser Zusammensetzung wurden die in der Tabelle 1 angegebenen Mengen an n,n-Dimethyl-para-toluidin, 1,4-Butandioldimethylacrylat (1,4-BDMA) und Paraffinen (Fp. 50-52°C) zugegeben. Nachdem die erhaltenen Zusammensetzungen gut durchgemischt waren, wurde direkt vor der Härtung die angegebene Menge an BP-50-FT eine Minute eingerührt. BP-50-FT ist ein Pulver, welches 50 Gew.-% Dibenzoylperoxid enthält, das mit Dicyclohexylphtalat phlegmatisiert wurde. Die Harze wurden in einer Dicke von ca. 1 cm auf Beton aufgetragen und bei Umgebungstemperatur für 90 Minuten gehärtet. Die erzielten Ergebnisse sind ebenfalls in der Tabelle 1 aufgeführt. Schlechte Härtung bedeutet, daß das Harz nach der angegebenen Zeit klebrig war. Eine gute Härtung steht für eine klebfreie Aushärtung der Systeme.

Alle in Tabelle 1 angegebenen Werte sind Gewichtsteile, bezogen auf die Gesamtmenge des Reaktionsharzes (Komponente A) bis E)).

**Tabelle 1:**

| Versuch | Paraffin | N,N-Dimethyl-p-toluidin | 1,4-BDMA | BP-50-FT | Härtung |
|---|---|---|---|---|---|
| Vgl. 1 | 1 | - | 1,5 | 2 | schlecht |
| Vgl. 2 | 1 | - | 1,5 | 4 | schlecht |
| Vgl. 3 | 1 | 0,3 | 1,5 | 2 | schlecht |
| Vgl. 4 | 1 | 0,3 | 1,5 | 4 | schlecht |
| Vgl. 5 | 1 | 0,5 | 1,5 | 2 | schlecht |
| Vgl. 6 | 1 | 0,5 | 1,5 | 4 | schlecht |
| Vgl. 7 | 3 | - | 1,5 | 2 | schlecht |
| Vgl. 8 | 1 | - | 3 | 2 | schlecht |
| Bsp. 1 | 3 | - | 3 | 2 | mittel |
| Bsp. 2 | 3 | - | 3 | 4 | mittel |
| Bsp. 3 | 3 | - | 5 | 2 | gut |
| Bsp. 4 | 3 | - | 5 | 4 | gut |

Es zeigt sich, daß nur durch eine Erhöhung des Paraffingehalts und des Anteils an einem mehrwertigen (Meth)acrylat eine gute Härtung erzielt werden kann.

Andere Maßnahmen, wie beispielsweise die Änderung des Initiatorgehalts oder des Anteils an Beschleuniger führen nicht zum erwünschten Effekt. Ebenso wirkungslos bleibt die Erhöhung nur des 1,4-BDMA- oder des Paraffinanteils.

Messungen über den Zeitraum von fünf Stunden ergaben, daß bei dem Auftragen der Reaktionsharze nur sehr geringe Mengen an Butylmethacrylat an die Umgebung abgegeben werden (< 10 ppm), so daß eine Gesundheitsgefährdung ausgeschlossen werden kann.

### Beispiele 5 bis 8

Zur Herstellung eines Klarfilms wurden bei 60°C 25,0 Gewichtsteile PLEXIGUM PM 381 (Röhm GmbH)und 3,0 Gewichtsteile geschmolzenes Paraffin (Fp. 50-52 °C)in einer Mischung aus 65,8 Gewichtsteile Basismonomer (siehe Tabelle 2), 5,0 Gewichtsteile 1,4-Butandioldimethylacrylat, 0,2 Gewichtsteile ®Tinuvin P (2-(2-Hydroxy-5-methylphenyl)benzotriazol) und 0,02 Gewichtsteile 4-Methyl-2,6-di-tert.-Butylphenol gelöst. Nach dem Abkühlen auf ca. 30°C wurde 1,0 Gewichtsteil N,N-bis (2-Hydroxyethyl)-p-toluidin zugegeben.

Nachdem die erhaltenen Zusammensetzungen gut durchgemischt waren, wurde direkt vor der Härtung 2 Gewichtsteile BP-50-FT (siehe oben) eine Minute eingerührt. Die Harze wurden in einer Dicke von ca. 0,8 cm auf eine mit ®Hostaphan-Folie bedeckte Gehwegplatte aufgetragen und bei Umgebungstemperatur für 60 Minuten gehärtet. Die erzielten Ergebnisse sind ebenfalls in der Tabelle 2 aufgeführt.

Zur Herstellung gefüllter Beschichtungen wurde eine Zusammensetzung aus 75 Gewichtsteilen Quarzsand als Füllstoff (Silimix-Mischung Nr. 270 der Westdeutschen Quarzwerke Dr. Müller GmbH, Dorsten) und 25 Gewichtsteile des Bindemittels (gleiche Zusammensetzung wie entsprechender Klarfilm) ohne Initiator intensiv durchmischt.

Nachdem die erhaltenen Zusammensetzungen gut durchgemischt waren, wurden direkt vor der Härtung 2 Gewichtsteile BP-50-FT (siehe oben), bezogen auf das Bindemittel, eine Minute eingerührt. Die Zusammensetzungen wurden in einer Dicke von ca. 0,8 cm auf eine mit ®Hostaphan-Folie bedeckte Gehwegplatte aufgetragen und bei Umgebungstemperatur für 60 Minuten gehärtet. Die erzielten Ergebnisse sind ebenfalls in der Tabelle 2 aufgeführt.

**Tabelle 2**

| Versuch | Basismonomer | Klarfilm | gefüllte Bschichtung |
|---|---|---|---|
| Bsp. 5 | Isobutylmethacrylat | klebfrei | klebfrei |
| Bsp. 6 | Hexylmethacrylat | klebfrei | klebfrei |
| Bsp. 7 | Cyclohexylmethacrylat | klebfrei | klebfrei |
| Bsp. 8 | Benzylmethacrylat | klebfrei | klebfrei |

Es zeigte sich, daß alle oben angegebenen Systeme dank der Kombination aus hohem Paraffinanteil und hohem Gehalt an mehrwertigem (Meth)acrylat klebfrei aushärten.

## Patentansprüche

1. Geruchsvermindertes, kalthärtendes (Meth) acrylat-Reaktionsharz für Bodenbeschichtungen bestehend aus
A)
| | |
|---|---|
| (Meth)acrylat | 50 - 100 Gew.-% |
| Methyl(meth)acrylat | 0 - 5 Gew.-% |
| Ethyl(meth)acrylat | 0 - 5 Gew.-% |
| C₃ - C₆ (Meth)acrylat | 0 - 97 Gew.-% |
| ≥ C₇ (Meth)acrylat | 0 - 50 Gew.-% |
| mehrwertige (Meth)acrylate | 3 - 10 Gew.-% |
| Comonomere | 0 - 50 Gew.-% |
| Vinylaromaten | 0 - 30 Gew.-% |
| Vinylester | 0 - 30 Gew.-%, |
wobei die Bestandteile der Komponente A) 100 Gew.-% ergeben,
B) 0 - 2 Gewichtsteilen auf 1 Gewichtsteil A) eines in A) löslichen oder quellbaren (Pre)polymers, wobei der Anteil an Methyl(meth)acrylat oder an Ethyl(meth)acrylat < 5 Gew.-%, bezogen auf B), beträgt,
C) 2 bis 5 Gewichtsteilen auf 100 Gewichtsteile (A + B) mindestens eines Paraffins und/oder Wachses,
D) einem bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A) und
E) üblichen Additiven.

2. Reaktionsharz nach Anspruch 1,
**dadurch gekennzeichnet**,
die Komponente E) in einer Menge im Bereich von 0 bis 100 Gewichtsteilen auf 10 Gewichtsteile der Komponenten (A + B) vorhanden ist.

3. Reaktionsharz nach Anspruch 1 oder 2,
**dadurch gekennzeichnet,**
**daß** die Komponente A) n-Butylmethacrylat, Isobutylmethacrylat, Hexylmethacrylat, Cyclohexylmethacrylat, Benzylmethacrylat und/oder 1,4-Butandioldimethylacrylat enthält.

4. Reaktionsharz nach einem der vorhergehenden Ansprüche,
**dadurch gekennzeichnet,**
**daß** die Komponente B) (Pre)polymer auf Basis von (Meth)acrylaten enthält.

5. Reaktionsharz nach einem der vorhergehenden Ansprüche,
**dadurch gekennzeichnet,**
**daß** der Anteil der Komponente C) 2,5 bis 3,5 Gewichtsteile auf 100 Gewichtsteile der Summe aus (A + B) beträgt.

6. Reaktionsharz nach einem der vorhergehenden Ansprüche,
**dadurch gekennzeichnet,**
**daß** als Komponente D) ein System aus Aminen und Dibenzoylperoxid, insbesondere n,n-Bis(2-Hydroxyethyl)-p-toluidin und Dibenzoylperoxid verwendet wird.

7. Reaktionsharz nach einem der vorhergehenden Ansprüche,
**dadurch gekennzeichnet,**
**daß** sowohl die Komponente A) als auch die Komponente B) frei von Methyl(meth)acrylat oder Ethyl(meth)acrylat ist.

8. Geruchsverminderte Bodenbeschichtungen erhältlich durch Auftragen und Aushärten eines polymerisierbaren, bei Temperaturen von -10 bis +45 °C kalthärtbaren (Meth)acrylat-Systems gemäß Anspruch 1.

9. Verfahren zur Herstellung einer geruchsverminderten Bodenbeschichtung,
**dadurch gekennzeichnet,**
**daß** man ein geruchsvermindertes, kalthärtendes (Meth) acrylat-Reaktionsharz für Bodenbeschichtungen bestehend aus
A)
| | |
|---|---|
| (Meth)acrylat | 50 - 100 Gew.-% |
| Methyl(meth)acrylat | 0 - 5 Gew.-% |
| Ethyl(meth)acrylat | 0 - 5 Gew.-% |
| C₃ - C₆ (Meth)acrylat | 0 - 97 Gew.-% |
| ≥ C₇ (Meth)acrylat | 0 - 50 Gew.-% |
| mehrwertige (Meth)acrylate | 3 - 10 Gew.-% |
| Comonomere | 0 - 50 Gew.-% |
| Vinylaromaten | 0 - 30 Gew.-% |
| Vinylester | 0 - 30 Gew.-%, |
wobei die Bestandteile der Komponente A) 100 Gew.-% ergeben,
B) 0 - 2 Gewichtsteilen auf 1 Gewichtsteil A) eines in A) löslichen oder quellbaren (Pre)polymers, wobei der Anteil an Methyl(meth)acrylat oder an Ethyl(meth)acrylat < 5 Gew.-%, bezogen auf B), beträgt,
C) 2 bis 5 Gewichtsteilen auf 100 Gewichtsteile (A + B) mindestens eines Paraffins und/oder Wachses,
D) einem bis zur Polymerisation von den polymerisierbaren Bestandteilen des Systems wenigstens in Bezug auf eine Komponente des Redoxsystems getrennt zu haltendes Redoxsystem enthaltend einen Beschleuniger und einen peroxydischen Katalysator oder Initiator in einer Menge ausreichend zur Kalthärtung der Komponente A) und
E) üblichen Additiven
auf eine zu beschichtende Fläche aufträgt und aushärten läßt.

10. Verfahren nach Anspruch 9,
**dadurch gekennzeichnet,**
**daß** das Aushärten bei Umgebungstemperatur (+10 bis +30 °C) erfolgt.

## Claims

1. Low-odour cold-hardening (meth) acrylate reaction resin for floor coverings consisting of
A)
| | |
|---|---|
| (meth)acrylate | 50-100% by weight |
| methyl(meth)acrylate | 0-5% by weight |
| ethyl(meth)acrylate | 0-5% by weight |
| C₃-C₆ (meth)acrylate | 0-97% by weight |
| ≥ C₇ (meth)acrylate | 0-50% by weight |
| polyvalent (meth)acrylates | 3-10% by weight |
| comonomers | 0-50% by weight |
| aromatic vinyl compounds | 0-30% by weight |
| vinyl esters | 0-30% by weight, |
wherein the ingredients of component A) make up 100% by weight,
B) 0-2 parts by weight to 1 part by weight of A) of a (pre)polymer which is soluble or swellable in A), the proportion of methyl (meth)acrylate or ethyl (meth)acrylate being less than 5% by weight, based on B),
C) 2 to 5 parts by weight, to 100 parts by weight of (A + B), of at least one paraffin and/or wax,
D) a redox system which is to be kept separate, up to the time of polymerisation, from the polymerisable ingredients of the system, at least with respect to one component of the redox system, this redox system containing an accelerator and a peroxidic catalyst or initiator in an amount sufficient for the cold-hardening of component A) and
E) conventional additives.

2. Reaction resin according to claim 1, **characterised in that** component E) is present in an amount in the range from 0 to 100 parts by weight to 10 parts by weight of components (A + B).

3. Reaction resin according to claim 1 or 2, **characterised in that** component A) contains n-butyl methacrylate, isobutyl methacrylate, hexyl methacrylate, cyclohexyl methacrylate, benzyl methacrylate and/or 1,4-butanediol dimethyl acrylate.

4. Reaction resin according to one of the preceding claims, **characterised in that** component B) contains (pre)polymer based on (meth)acrylates.

5. Reaction resin according to one of the preceding claims, **characterised in that** the proportion of component C) is 2.5 to 3.5 parts by weight to 100 parts by weight of the sum of (A + B).

6. Reaction resin according to one of the preceding claims, **characterised in that** a system of amines and dibenzoylperoxide, particularly n,n-bis(2-hydroxyethyl)-p-toluidine and dibenzoylperoxide is used as component D) .

7. Reaction resin according to one of the preceding claims, **characterised in that** both component A) and component B) are free from methyl (meth)acrylate or ethyl (meth)acrylate.

8. Low-odour floor coverings obtainable by applying and curing a polymerisable (meth)acrylate system according to claim 1 which is cold-hardenable at temperatures from -10 to +45°C .

9. Process for producing a low-odour floor covering, **characterised in that** a low-odour cold-hardening (meth)acrylate reaction resin for floor coverings consisting of
A)
| | |
|---|---|
| (meth)acrylate | 50-100% by weight |
| methyl(meth)acrylate | 0-5% by weight |
| ethyl(meth)acrylate | 0-5% by weight |
| C₃-C₆ (meth)acrylate | 0-97% by weight |
| ≥ C₇ (meth)acrylate | 0-50% by weight |
| polyvalent (meth)acrylates | 3-10% by weight |
| comonomers | 0-50% by weight |
| aromatic vinyl compounds | 0-30% by weight |
| vinyl esters | 0-30% by weight, |
wherein the ingredients of component A) make up 100% by weight,
B) 0-2 parts by weight to 1 part by weight of A) of a (pre)polymer which is soluble or swellable in A), the proportion of methyl (meth)acrylate or ethyl (meth)acrylate being less than 5% by weight, based on B),
C) 2 to 5 parts by weight, to 100 parts by weight of (A + B), of at least one paraffin and/or wax,
D) a redox system which is to be kept separate, up to the time of polymerisation, from the polymerisable ingredients of the system, at least with respect to one component of the redox system, this redox system containing an accelerator and a peroxidic catalyst or initiator in an amount sufficient for the cold-hardening of component A) and
E) conventional additives
is applied to a surface to be coated and is left to harden.

10. Process according to claim 9, **characterised in that** the hardening takes place at ambient temperature (+10 to +30°C).

## Revendications

1. Résine réactive en (méth)acrylate durcissant à froid, à odeur réduite, pour revêtements de sol. consistant en :
A)
| | |
|---|---|
| (méth)acrylate | 50 - 100 % en poids |
| (méth)acrylate de méthyle | 0 - 5 % en poids |
| (méth)acrylate d'éthyle | 0 - 5 % en poids |
| (méth)acrylates en C₃-C₆ | 0 - 97 % en poids |
| (méth)acrylates ≥ C₇ | 0 - 50 % en poids |
| (méth)acrylates plurifonctionnels | 3 - 10 % en poids |
| Comonomères | 0 - 50 % en poids |
| aromatiques vinyliques | 0 - 30 % en poids |
| ester vinylique | 0 - 30 % en poids |
les constituants des composants A) cumulant à 100 % en poids,
B) 0 - 2 parties en poids pour 1 partie en poids A d'un (pré)polymère soluble dans A) ou apte à gonfler, la proportion de (méth)acrylate de méthyle ou de (méth)acrylate d'éthyle étant < 5 % en poids rapporté à B,
C) 2 à 5 parties en poids pour 100 parties en poids (A + B) d'au moins une paraffine et/ou d'une cire,
D) un système redox à maintenir jusqu'à la polymérisation séparé des constituants polymérisables du système au moins vis-à-vis d'un composant du système redox, contenant un accélérateur et un catalyseur ou un promoteur peroxydique en une quantité suffisante pour le durcissement à froid du composant A), et
E) des additifs usuels.

2. Résine réactive selon la revendication 1,
**caractérisée en ce que**
le composant E) est présent en une quantité dans la zone de 0 à 100 parties en poids pour 10 parties en poids des composants (A + B).

3. Résine réactive selon l'une quelconque des revendications 1 ou 2,
**caractérisée en ce que**
le composant A) renferme du méthacrylate de n-butyle, du méthacrylate d'isobutyle, du méthacrylate d'hexyle, du méthacrylate de cyclohexyle, du méthacrylate de benzyle et/ou du diméthylacrylate de 1,4-butanediol.

4. Résine réactive selon l'une quelconque des revendications précédentes,
**caractérisée en ce que**
le composant B) renferme un (pré)polymère à base de (méth)acrylates.

5. Résine réactive selon l'une quelconque des revendications précédentes,
**caractérisée en ce que**
la proportion de composant C) s'élève de 2,5 à 3,5 parties en poids pour 100 parties en poids de la somme de (A + B).

6. Résine réactive selon l'une quelconque des revendications précédentes,
**caractérisée en ce que**
comme composant D) on utilise un système à base d'aminés et de peroxyde de dibenzoyle, en particulier la n,n-bis(2-hydroxyéthyl)-p-toluidine et le peroxyde de dibenzoyle.

7. Résine réactive selon l'une quelconque des revendications précédentes,
**caractérisée en ce qu'**
aussi bien le composant A) que le composant B) est dépourvu de (méth)acrylate de méthyle ou de (méth)acrylate d'éthyle.

8. Revêtement de sol à odeur réduite accessible par application et durcissement complet d'un système de (méth)acrylate, polymérisable, durcissable à froid à des températures allant de -10°C à + 45°C conformément à la revendication 1.

9. Procédé de préparation d'un revêtement de sol à odeur réduite,
**caractérisé en ce qu'**
on applique une résine réactive (méth)acrylate à odeur réduite, durcissant à froid pour revêtement de sol, consistant en :
A)
| | |
|---|---|
| (méth)acrylate | 50 - 100 % en poids |
| (méth)acrylate de méthyle | 0 - 5 % en poids |
| (méth)acrylate d'éthyle | 0 - 5 % en poids |
| (méth)acrylates en C₃-C₆ | 0 - 97 % en poids |
| (méth)acrylates ≥ C₇ | 0 - 50 % en poids |
| (méth)acrylates plurifonctionnels | 3 - 10 % en poids |
| Comonomères | 0 - 50 % en poids |
| aromatiques vinyliques | 0 - 30 % en poids |
| ester vinylique | 0 - 30 % en poids |
les constituants des composants A) cumulant à 100 % en poids,
B) 0 - 2 parties en poids pour 1 partie en poids A) d'un (pré)polymère soluble dans A)ou apte à gonfler, la proportion de (méth)acrylate de méthyle ou de (meth)acrylate d'éthyle étant < 5 % en poids rapporté à B),
C) 2 à 5 parties en poids pour 100 parties en poids (A + B) d'au moins une paraffine et/ou d'une cire,
D) un système redox à maintenir jusqu'à la polymérisation séparé des constituants polymérisables du système, au moins vis-à-vis d'un composant du système redox, contenant un accélérateur et un catalyseur ou un promoteur peroxydique en une quantité suffisante pour le durcissement à froid du composant A), et
E) des additifs usuels,
sur une surface à revêtir et on laisse durcir.

10. Procédé selon la revendication 9,
**caractérisé en ce que**
le durcissement complet s'effectue à température ambiante (+ 10 à + 30°C).
